# EUROPÄISCHE PATENTSCHRIFT

(11) **EP 1 287 730 B1**
(45) Veröffentlichungstag und Bekanntmachung des Hinweises auf die Patenterteilung: **06.06.2012**
(21) Anmeldenummer: 02019528.5
(22) Anmeldetag: 30.08.2002
(51) Int. Cl.: A01D 17/06, B07B 1/14, B07B 1/15

(54) **Erntemaschine für Hackfrüchte, insbesondere Kartoffeln**
Harvester for root crops, particularly potatoes
Machine à récolter des plantes racines, en particulier des pommes de terre

(30) Priorität: 31.08.2001 DE 10142436
(43) Veröffentlichungstag der Anmeldung: 05.03.2003
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Busse & Busse

(56) Entgegenhaltungen:
- EP-A- 0 678 234
- EP-A- 0 704 253
- DE-A- 3 027 651
- GB-A- 2 247 817
- GB-A- 2 312 144
- US-A- 4 471 876

## Beschreibung

Die Erfindung betrifft eine Erntemaschine für Hackfrüchte, insbesondere Kartoffeln, gemäß dem Oberbegriff des Anspruchs 1.

Derartige Erntemaschinen (DE 696 00 835 T2) nehmen bei der Hackfruchternte, insbesondere Kartoffelernte, das Erntegut aus dem Erdreich auf, wobei durch eine nachfolgend auf der Erntemaschine vorgesehene Trennvorrichtung das Erntegut von mit diesem vermischten Teilen wie Steinen, Hölzern, Kluten und dgl. getrennt wird. Derartige, auch in GB 2312144 und US 4471876 gezeigte, Trennvorrichtungen weisen dabei in ihrer in Förderrichtung letzten Trennstufe eine Baugruppe mit einem Rollenseparator auf. Dieser ist zwischen angetriebenen Rollen für die Trennung des Erntegutes von den Beimengungen mit jeweiligen Durchlaßspalten versehen, deren Größe an unterschiedliche Erntebedingungen angepaßt wird. Diese parallel zur Förderrichtung verlaufende Achsen aufweisenden Rollen des Rollenseparators können einzeln oder gruppenweise ausgewechselt werden, so dass mit deren unterschiedlichen Durchmessern das Maß der jeweiligen Durchlaßspalte verändert werden kann. Dieser Wechselvorgang ist bei hohem Umrüstaufwand mit nachteiligen Stillstandszeiten der Maschine verbunden. Bei der Vorrichtung gemäß US 4471876 sind die Rollen mit an einem Tischrahmen gehaltenen Lagerlöchern verbunden, die nach einer Bedienung von Hand eine radiale Verschiebung der Rollen in Langlöchern ermöglichen.

Die Erfindung befaßt sich mit dem Problem, eine Erntemaschine für Hackfrüchte zu schaffen, bei der mit geringem konstruktivem Aufwand und kurzer Einstellzeit eine Anpassung des Durchlaßspaltes an unterschiedliche Erntebedingungen möglich ist.

Die Erfindung löst dieses Problem mit den Merkmalen des Anspruchs 1. Hinsichtlich wesentlicher weiterer Ausgestaltungen wird auf die Ansprüche 2 bis 16 verwiesen.

Der erfindungsgemäße Rollenseparator ist im Bereich seiner fliegend gelagerten Spiral- und Gegenrollen antriebsseitig als eine Baueinheit ausgeführt, in die zur Veränderung des jeweiligen Durchlaßspaltes eine Rollenverstellung integriert ist. Zumindest eine der in einer Reihenanordnung paarweise zusammenwirkenden Spiralrollen bzw. Gegenrollen ist dabei jeweils radial verstellbar, so daß mit einer stufenlosen Abstandsänderung insbesondere für die mit dem Emtegut geförderten Kluten ein variabler Durchlaßspalt vorgegeben wird. Mit dieser Rollenverstellbarkeit ist beispielsweise bei Bewegung der Erntemaschine auf einer Erntefläche eine direkte und schnelle Anpassung an sich jeweils durch unterschiedliche Feuchtigkeit verändernde Klutengrößen möglich. Die Einstellung des radialen Abstandes zwischen den Rollen erfolgt dabei über ein zusätzliches Antriebsorgan, so daß der Stellaufwand gering gehalten ist und eine Bedienperson auch bei im Einsatz befindlicher Maschine schnell auf sich verändernde Arbeitsbedingungen, z. B. feuchte Bereiche auf einem Feld, reagieren kann.

Mit konstruktiv geringem Aufwand sind die jeweils eine exzentrische Lagerung aufweisenden Spiralrollen als insgesamt einstellbare Baugruppe antriebsseitig verbunden, so daß mit einfachen Stellmitteln im Bereich der jeweiligen Gegenrolle ein Heranführen bzw. Entfernen der Spiralrolle möglich ist. Die Spiralrolle kann dabei auf einer bogenförmigen Bahn kontinuierlich verlagert werden, so daß das Spaltmaß des Durchlaßspaltes stufenlos verändert wird. Für den exzentrischen Stellantrieb der Spiralrolle ist im Nahbereich des Antriebsgetriebes ein unabhängig vom Antrieb des Rollenseparators betätigbarer Hydraulikantrieb vorgesehen, mit dem durch eine Zahnstangen-Ritzel-Verbindung am stirnseitigen Ende der Antriebswelle eine genaue Verlagerung der Spiralrolle in die vorgesehene Exzenterstellung erreicht wird.

Die Erfindung wird in der nachfolgenden Beschreibung mit Hilfe der Zeichnung, in der ein Ausführungsbeispiel des Gegenstands der Erfindung näher veranschaulicht ist, näher erläutert. In der Zeichnung zeigen:
- Fig. 1: eine ausschnittsweise Seitenansicht einer als Kartoffelerntemaschine ausgebildeten Erntemaschine in ihrem in Fahrtrichtung hinteren Bereich,
- Fig. 2: eine Draufsicht der Erntemaschine gemäß Fig. 1 mit jeweiligen Zuführ- und Abführbereichen an einem Spiralrollen und Gegenrollen aufweisenden Rollenseparator,
- Fig. 3: eine vergrößerte Ausschnittsdarstellung des Rollenseparators im Bereich dessen Antriebseinheit gemäß einer Linie III-III in Fig. 1,
- Fig. 4: eine stirnseitige Ausschnittsdarstellung eines in die Antriebsbau- gruppe integrierten Stellantriebes gemäß einer Linie IV-IV in Fig. 3,
- Fig. 5: eine Ausschnittsdarstellung ähnlich Fig. 4 mit den Teilen des Stel- lantriebes in einer zweiten Position bei Verstellung der Spiralrolle,
- Fig. 6: eine Draufsicht gemäß einer Linie VI-VI in Fig. 5,
- Fig. 7: eine Schnittdarstellung gemäß einer Linie VII-VII in Fig. 6,
- Fig. 8: eine Vorderansicht des Rollenseparators mit dem die Rollen untergreifenden Stellantrieb,
- Fig. 9: eine Prinzipdarstellung der Eingriffsverhältnisse im Bereich der Spiralrolle und der zugeordneten Gegenrollen,
- Fig. 10 und Fig. 11: jeweilige Einzeldarstellungen der mit einer Vorschubspirale verse- henen Spiralrolle in unterschiedlichen Ausführungen.

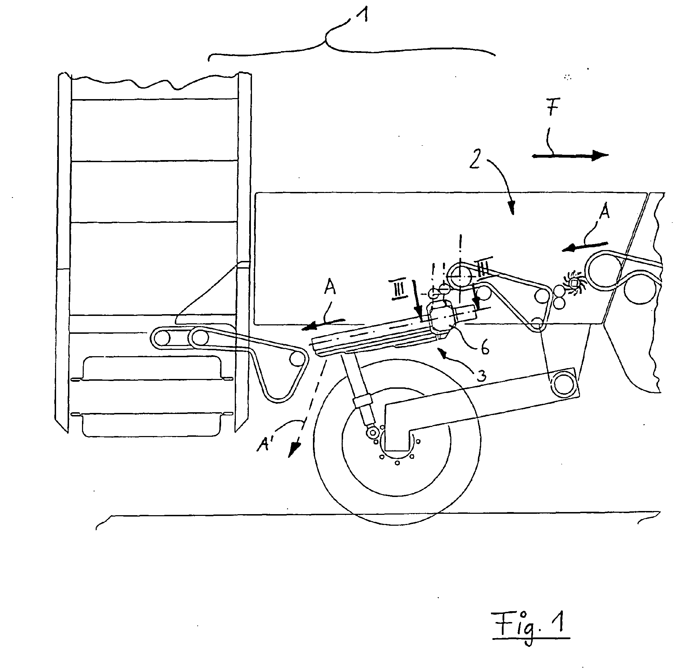

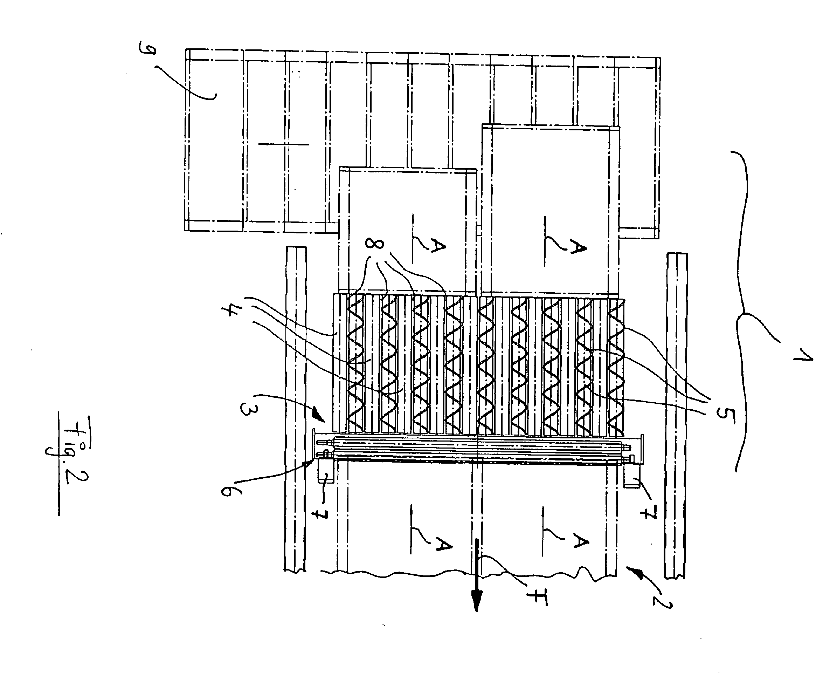

In Fig. 1 ist eine insgesamt mit 1 bezeichnete Erntemaschine, insbesondere als Kartoffelerntemaschine vorgesehene Maschine, dargestellte, die mit einer das Erntegut mit Beimengungen aus Erddämmen (nicht dargestellt) aufnehmenden und über Siebbänder o. dgl. weiterleitenden Trennvorrichtung 2 versehen ist, wobei das Erntegut mit den Beimengungen in einer entgegen der Fahrtrichtung F verlaufenden Förderrichtung A über die einzelnen Teilbereiche der Trennvorrichtung 2 geleitet wird und dabei eine Separierung erfolgt. Die Trennvorrichtung 2 ist endseitig mit zumindest einem Rollenseparator 3 versehen, der eine quer zur Förderrichtung A ausgerichtete Reihenanordnung (Fig. 2) von im wesentlichen parallel zur Fahrtrichtung F verlaufenden Gegenrollen 4 und Spiralrollen 5 aufweist. Diese Rollen 4 und 5 sind jeweils paarweise gegensinnig drehbar mit einer Antriebsbaugruppe 6 verbunden, die einen bzw. zwei Hydraulikmotoren 7 aufweist. In der dargestellten Einbaulage ist der Rollenseparator 3 in Förderrichtung A geneigt. Das in Förderrichtung A mit Beimengungen geförderte Erntegut wird im Bereich des Rollenseparators 3 dadurch getrennt, daß beispielsweise Kluten o. dgl. Beimengungen in einer Auswurfrichtung A' durch einen Durchlaßspalt 8 (Fig. 2) hindurchgefördert und das Erntegut zu einem Querförderband 9 hin weitertransportiert wird.

Der vorbeschriebene Aufbau der Erntemaschine 1 mit dem Rollenseparator 3 kann prinzipiell für unterschiedliche Einsatzzwecke, beispielsweise für andere Hackfrüchte oder in einer Sortieranlage (nicht dargestellt) eingesetzt werden. Für den Trennvorgang im Bereich des Rollenseparators 3 ist die Größe des Durchlaßspaltes 8 jeweils an die Größenverhältnisse des Erntegutes und der Beimengungen, beispielsweise der Kluten, anzupassen, wobei bei bisher bekannten Rollenseparatoren die Rollen 4 bzw. 5 jeweils ausgewechselt und so an die veränderten Einsatzbedingungen angepaßt wurden.

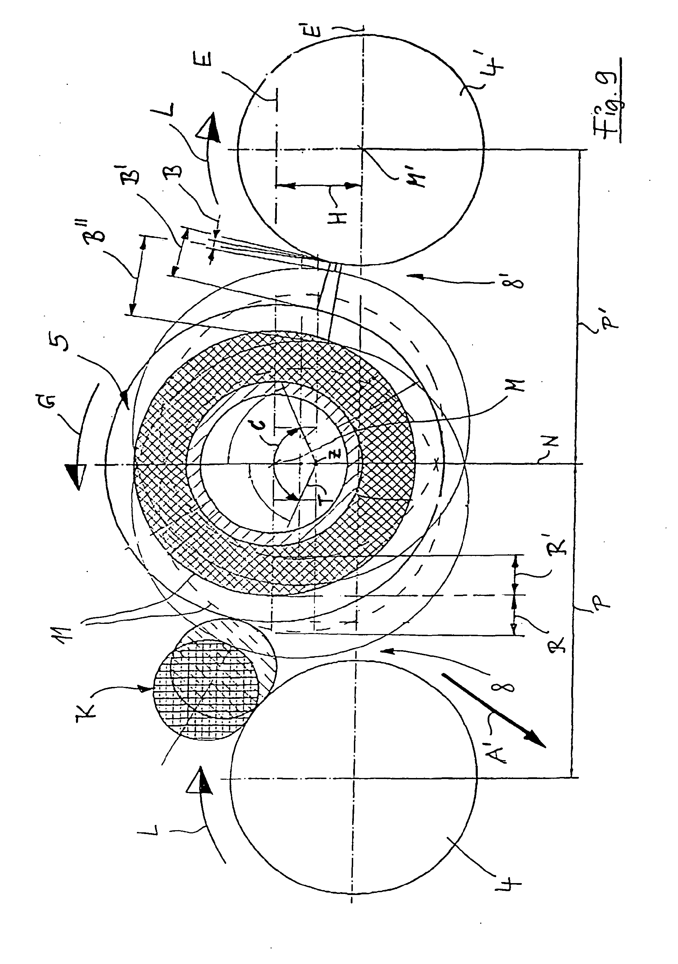

Bei dem erfindungsgemäß ausgebildeten Rollenseparator 3 ist der im Bereich jeden Rollenpaares 4, 5 bestehende Durchlaßspalt 8 durch eine radiale Verstellung R, R' (Fig. 9) der Rollen, im dargestellten Ausführungsbeispiel nur der Spiralrolle 5, einstellbar. In Fig. 9 ist die Spiralrolle 5 in einer Mittelstellung (Mittellängsebene N) dargestellt, so daß eine Verstellung der mit Pfeilen R und R' dargestellten Abstandsmaße zu den Rollen 4 und 5 (gleicher Mittenabstand P, P') möglich ist. Auf der rechten Seite in Fig. 9 ist eine dem nebengeordneten Rollenpaar zugeordnete Gegenrolle 4' dargestellt, an der beispielhaft die Verhältnisse im Spalt 8' mit jeweiligen Maßpfeilen B (geringster Abstand), B' (Mittelstellung) und B" (maximaler Abstand) dargestellt sind. Diese Abstände B, B', B" können spiegelbildlich in den Durchlaßspalt 8 auf der rechten Seite in Fig. 9 übertragen werden, so daß sich im Arbeitsspalt 8 für Kluten K entsprechende Verhältnisse ergeben. Die an der insbesondere aus Gummi bestehenden Oberfläche 11 der Spiralrolle 5 anliegenden Kluten K werden bei Einleitung der Drehbewegung G (Spiralrolle 5) und L (Gegenrolle 4) reibschlüssig im Zwickel der Rollen 4 und 5 erfaßt und in der Auswurfrichtung A' durch den Rollenseparator 3 ausgeschieden. Bedingt durch die Drehrichtungen G sowie L' der Gegenrolle 4' bleibt der Durchlaßspalt 8' frei. Ebenso ist denkbar, daß die Drehrichtungen des Systems umgekehrt werden (nicht dargestellt).

In einer weiteren nicht dargestellten Ausführungsform ist denkbar, daß die Spiralrollen 5 und die Gegenrollen 4 jeweils einzeln verstellbar sind. Ebenso kann vorgesehen sein, daß die gleichen Rollen jeden Rollenpaares 4, 5 jeweils gemeinsam verstellbar sind.

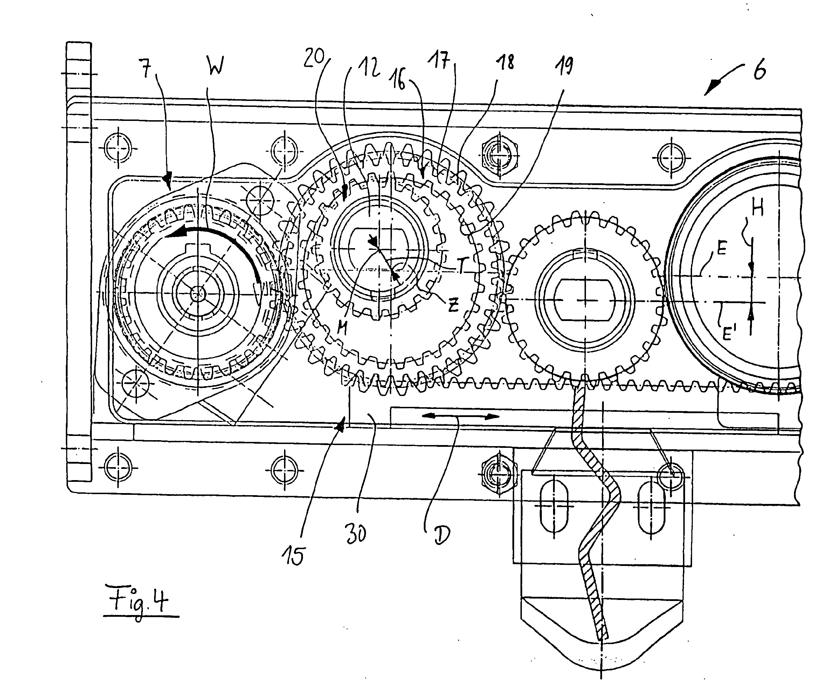

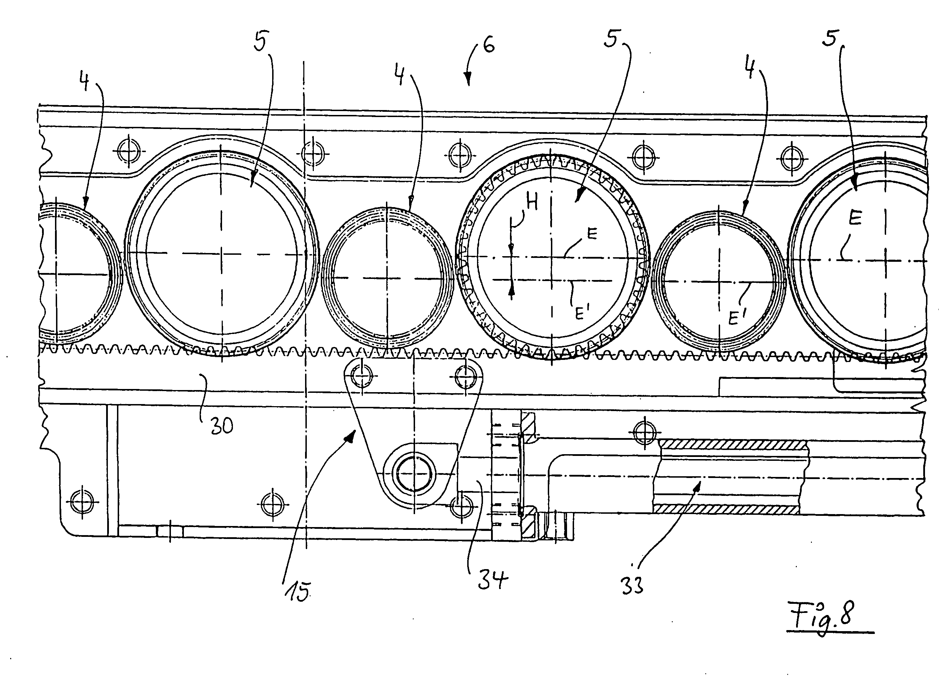

Die Prinzipdarstellung gemäß Fig. 9 verdeutlicht in Zusammenschau mit Fig. 4 und 8 die Reihenanordnung der Spiralrollen 5 und der Gegenrollen 4, wobei diese gruppenweise jeweils eine mit einem Höhenabstand H angeordnete Horizontalebenen E und E' definieren. Mit dieser Anordnung ist erreicht, daß die Spiralrollen 5 mit ihren Mittellängsachsen M jeweils in der Horizontalebene E oberhalb der Horizontalebene E' der Gegenrollen 4 angeordnet sind. Ausgehend von der in Fig. 9 dargestellten Mittelstellung (Abstand P, P') zwischen den zwei Gegenrollen 4 und 4' ist die Spiralrolle 5 derart verstellbar, daß die Spiralrolle 5 auf einer bogenförmigen Bahnkurve C sowohl zur zugeordneten Gegenrolle 4 als auch zur benachbarten Gegenrolle 4' hin verlagerbar ist (Pfeile R, R').

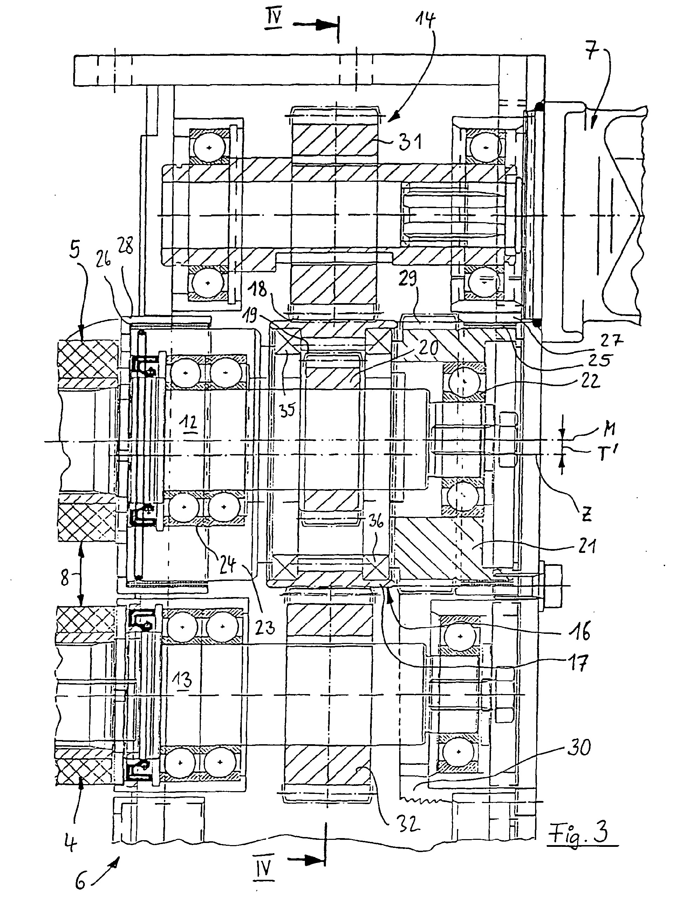

In Fig. 3 sind die nach Art einer fliegenden Lagerung abgestützten Rollen 4 und 5 im Bereich der Antriebsbaugruppe 6 in einer vergrößerten Schnittdarstellung verdeutlicht. Die Rollen 4 und 5 weisen jeweilige Antriebswellen 12 und 13 auf, die über ein insgesamt mit 14 bezeichnetes Zahnradgetriebe mit den Hydraulikmotoren 7 gekoppelt sind. In dieser Ausführungsform der einstellbaren Durchlaßspalte 8 sind nur die Spiralrollen 5 durch einen nachfolgend näher beschriebenen Stellantrieb 15 (Fig. 4) verlagerbar, wobei der Stellantrieb 15 mit seinen Bauteilen weitgehend in die stirnseitige Antriebsbaugruppe 6 im Bereich der Antriebswelle 12 integriert ist. Der Stellantrieb 15 ist dabei so konzipiert, daß sämtliche der in der Reihenanordnung befindliche Spiralrollen 5 gleichzeitig verlagert und damit die Durchlaßspalte 8 gleichsinnig veränderbar sind (Fig. 8). An Stelle des Zahnradgetriebes 14 ist auch die Anwendung eines Riementriebes o. dgl. denkbar. Mit jeweiligen Pfeilen G und L ist in Fig. 9 der Antrieb der Rollen 4 und 5 verdeutlicht.

Für die in Fig. 9 in einer Prinzipdarstellung verdeutlichte Verlagerung der Spiralrolle 5 ist diese im Bereich ihrer Antriebsbaugruppe 6 (Fig. 3 bis Fig. 8) bzw. des entsprechenden Zahnradgetriebes 14 mit einer exzentrisch gelagerten Antriebswelle 12 versehen, wobei sich die Exzentrizität T (Fig. 9) aus dem Abstand der Mittellängsachse M der Antriebswelle 12 zur Mittellängsachse Z eines die Antriebswelle 12 aufnehmenden Antriebsrades 16 des Zahnradgetriebes 14 ergibt (Fig. 4). In der Draufsicht gemäß Fig. 3 ist die projizierte Exzentrizität mit T' bezeichnet.

Die Zusammenschau von Fig. 3 und 4 verdeutlicht, daß die Spiralrolle 5 antriebsseitig im Bereich des Zahnradgetriebes 14 ein als das Antriebsrad 16 vorgesehenes Hohlrad 17 aufweist, an dem eine Außenverzahnung 18 und eine Innenverzahnung 19 vorgesehen sind. In diese Innenverzahnung 19 greift ein auf der Antriebswelle 12 festgelegtes Stellzahnrad 20 ein und in axialer Richtung zum stirnseitigen Ende der Antriebswelle 12 hin weist diese zumindest ein in einer Stellbuchse 21 exzentrisch gehaltenes Rollenlager 22 auf. In der dargestellten Ausführungsform ist auch andererseits des Stellzahnrades 20 bzw. des Hohlrades 17 eine zweite, mit der ersten 21 koaxiale Stellbuchse 23 mit Rollenlagern 24 vorgesehen. Die Stellbuchsen 21 und 23 sind ihrerseits durch außenseitige Gleitlager 25, 26 jeweils drehfest am Gehäuse der Antriebsbaugruppe 6 in jeweiligen Stützhülsen 27, 28 geführt.

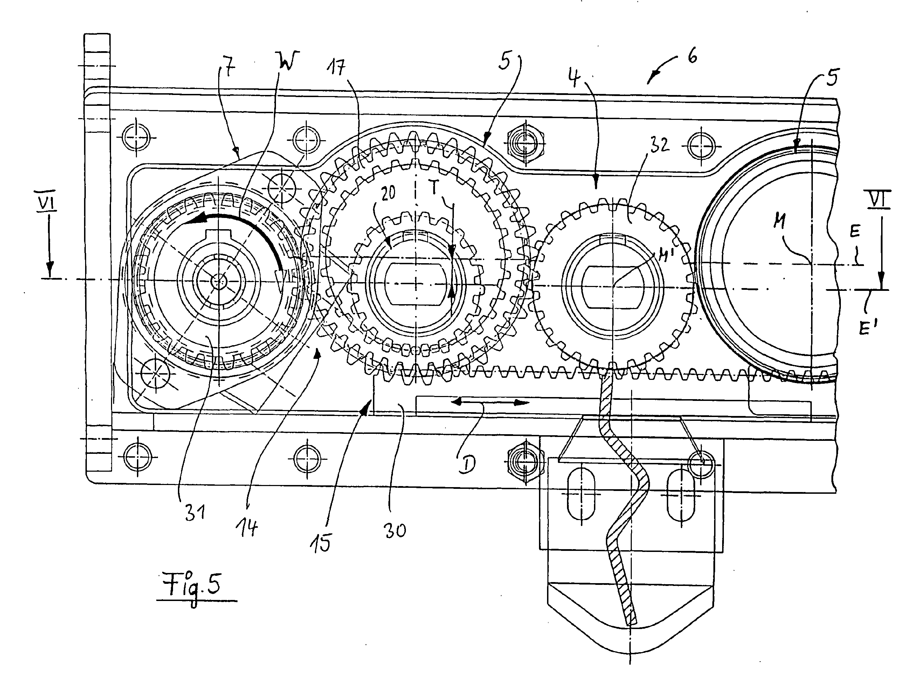

Im Bereich der stirnseitigen Stellbuchse 21 ist eine an dieser geformte Außenverzahnung 29 vorgesehen, die in Verbindungseingriff mit einer quer verlaufenden Zahnstange 30 (Fig. 4) verbringbar ist. Mit diesen beiden Teilen 29 und 30 ist die Antriebskomponente des Stellantriebs 15 gebildet. Dieser Stellantrieb 15 und die exzentrischen Stellbuchsen 21, 23 ermöglichen, daß die Spiralrolle 5 unabhängig von dem am Hohlrad 17 angreifenden Zahnradgetriebe 14 insgesamt exzentrisch verlagert werden kann. In Fig. 4 und 5 sind in zwei im wesentlichen gleichen Stirnansichten jeweils unterschiedliche Verlagerungsstellungen der Spiralrolle 5 innerhalb des Hohlrades 17 sichtbar. Denkbar ist dabei auch, daß der Stellantrieb 15 im Bereich der Stellbuchse 23 angeordnet wird oder ein Antrieb an beiden Buchsen 21 und 23 gleichzeitig angreift (nicht dargestellt).

Bei Einleitung einer Antriebsbewegung für den Rollenseparator 3 im Bereich des Hydraulikmotors 7 (Fig. 3) wird ein Antriebsritzel 31 in Eingriffsverbindung mit der Außenverzahnung 18 des Hohlrades 17 gebracht und dessen Drehbewegung über die Innenverzahnung 19 auf das Stellzahnrad 20 übertragen, so daß dieses als fest mit der Antriebswelle 12 verbundenes Teil das Drehmoment entsprechend auf die gesamte Spiralrolle 5 überträgt. Dieses Antriebsmoment wird über ein dem Hohlrad 17 nachgeordnetes Antriebsritzel 32 auch auf die Gegenrolle 4 übertragen, so daß damit fortlaufend die gesamte Reihenanordnung in Arbeitsbewegung gesetzt werden kann (Fig. 8).

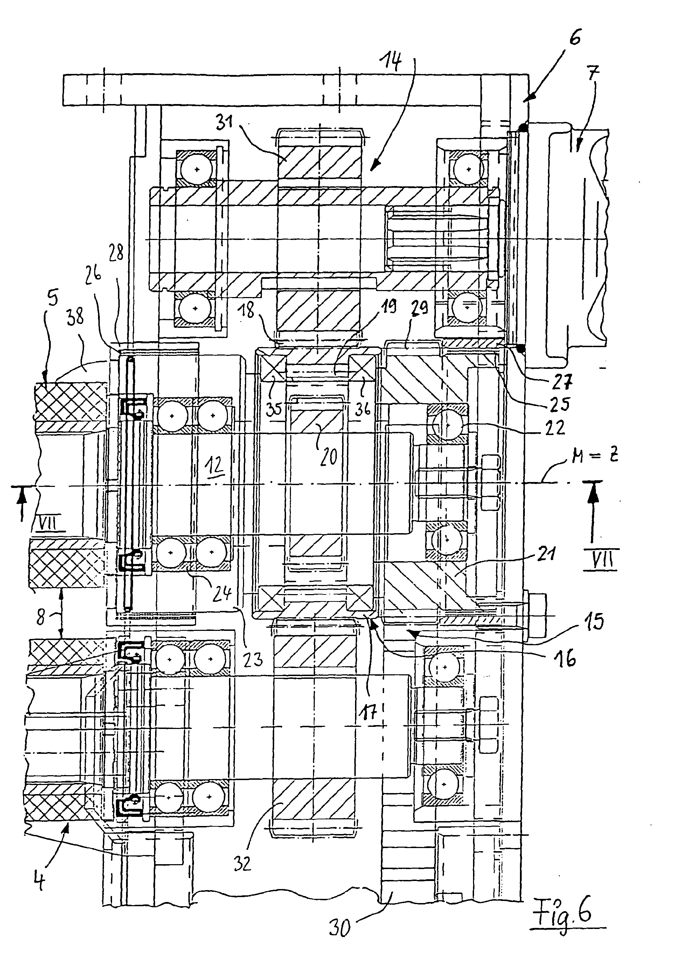

Für eine (auch während der laufenden Arbeitsbewegung der Rollen 4, 5 des Rollenseparators 3 ausführbare) Veränderung des Spaltmaßes 8 wird der Stellantrieb 15 mittels eines insbesondere hydraulischen Antriebes 33 mit einer Kolbenstange 34 in einer Vorschubrichtung D bewegt (Fig. 5). Die Zahnstange 30 kämmt dabei mit der Außenverzahnung 29 im Bereich der Stellbuchse 21 (Fig. 3, Fig. 6), so daß diese als in dem Gleitlager 25 drehbar geführtes Teil die Stellbewegung (Pfeil D) aufnimmt, die im Kugellager 22 gehaltene Antriebswelle 12 auf der Bahn C exzentrisch verlagert wird und damit die Spiralrolle 5 um das vorgesehene Maß B, B' oder B" im Durchlaßspalt 8 verschwenkt wird. Auch während dieser Einstellbewegung greift das innere Stellzahnrad 20 weiterhin in die Innenverzahnung 19 des Hohlrades 17 ein. Nach Abschluß des Stellvorgangs D bleibt die permanente Eingriffstellung des Stellzahnrades 20 in der Innenverzahnung 19 erhalten, so daß in dieser Schwenkstellung bezüglich des Hohlrades 17 (z. B. Fig. 4, Fig. 5) das Antriebsmoment (Pfeil W) des Zahnradantriebes 14 auf die Spiralrolle 5 übertragen wird und diese in den Lagern 22 und 24 abgestützt ist.

In der vorbeschriebenen Ausführung ist das Hohlrad 17 mit zwei insbesondere als Kugellager ausgebildeten Lagern 35 und 36 versehen, deren innere Lagerschalen jeweils so mit der Antriebswelle 12 verbunden sind, daß über das Stellzahnrad 20 der dargestellte Momenteneintrag W möglich ist.

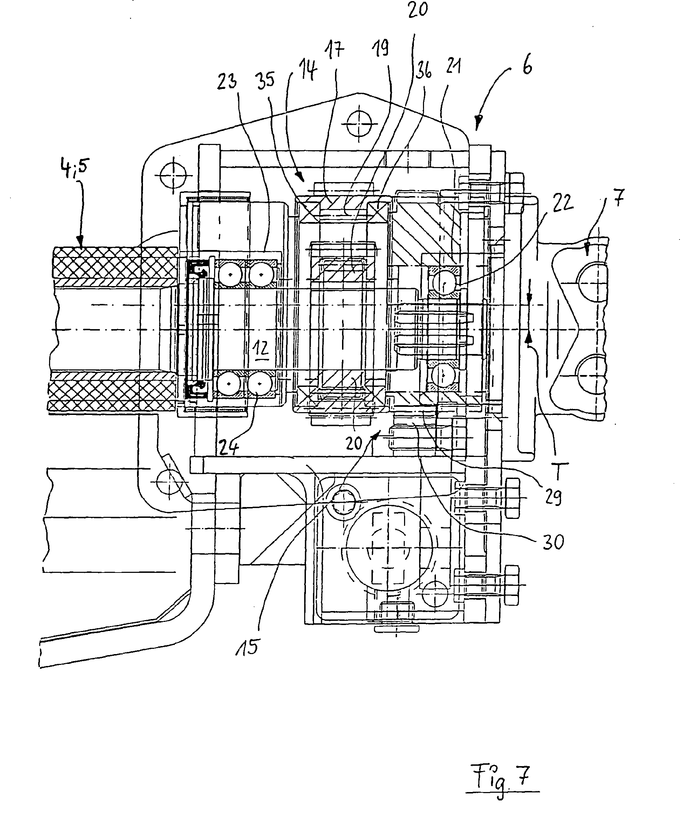

Die Zusammenschau der Darstellungen gemäß Fig. 5 bis 7 zeigt das Stellzahnrad 20 in einer unteren Mittelstellung im Hohlrad 20, wobei hier die Exzentrizität T entsprechend der Mittelstellung N gemäß Fig. 9 nur im Vertikalschnitt gemäß Fig. 7 deutlich wird, wobei die Stellbuchsen 21 und 23 die jeweils untere Extremstellung einnehmen.

Die vorbeschriebene Exzenterabstützung ist im wesentlichen anhand der Stellbuchse 21 dargestellt, die für das Stellsystem eine hinreichende Abstützung ermöglicht. Für die praktische Umsetzung des Prinzips der Antriebs- und Stellbaugruppe 6, 15 ist eine Ausführung mit den beiden Stellbuchsen 21 und 23 vorgesehen, mit denen für die insoweit frei gelagerten Rollen 4 und 5 eine hinreichende Schwingstabilität gewährleistet ist.

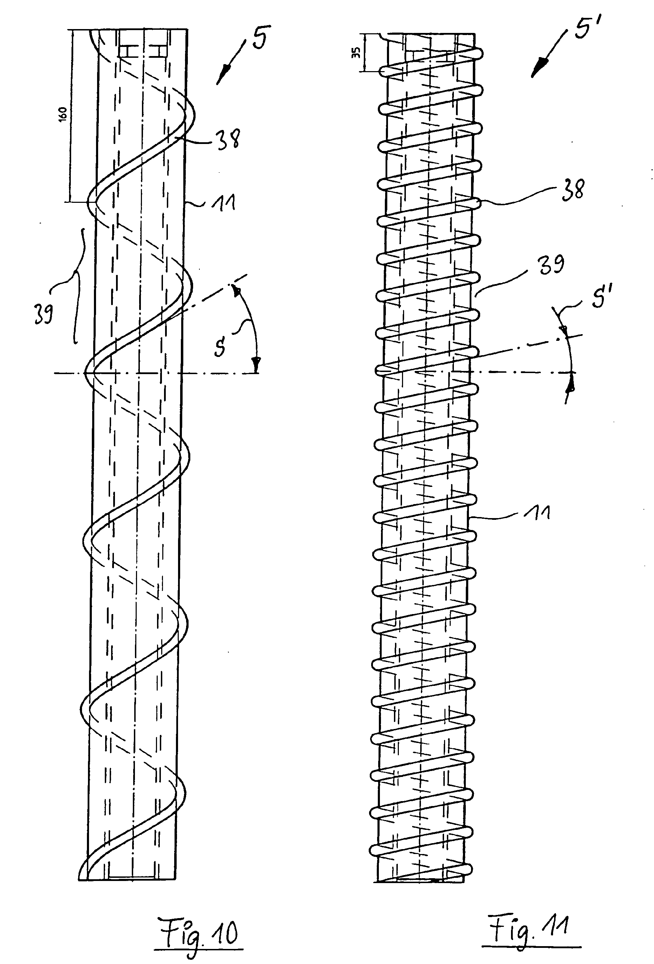

In Fig. 10 und Fig. 11 ist die Spiralrolle 5 in zwei unterschiedlichen Ausführungsformen dargestellt, wobei diese in an sich bekannter Ausführung (Fig. 10) auf ihrer die Förderstrecke bildenden Oberfläche 11 zumindest eine schraubenlinienförmige Vorschubwulst 38 mit einer Steigung S aufweist, die im Bereich der Oberfläche 11 einen jeweiligen Mitnahmeraum 39 definiert. Eine verbesserte Ausführungsform der Spiralrolle 5' gemäß Fig. 11 weist eine Vorschubwulst 38 auf, die zumindest bereichsweise eine geringere Steigung S' aufweist, so daß der Mitnahmeraum 39 optimal an die Größe des Erntegutes, beispielsweise Kartoffel, angepaßt ist und die Mitnahme weitgehend ohne Berührung der Oberfläche 11 nur im Bereich der Transportwülste 38 erfolgen kann.

## Patentansprüche

1. Erntemaschine für Hackfrüchte, insbesondere Kartoffeln, mit einer das Erntegut mit Beimengungen aus Erddämmen aufnehmenden und über Siebbänder o. dgl. weiterleitenden Trennvorrichtung (2), die endseitig mit zumindest einem Rollenseparator (3) versehen ist, der eine quer zur Förderrichtung (A) ausgerichtete Reihenanordnung von im wesentlichen parallel zur Förder- bzw. Fahrtrichtung (F) verlaufenden sowie paarweise gegensinnig drehbar angetriebenen Gegen- und Spiralrollen (4, 5) aufweist, zwischen denen ein Kluten (K) o. dgl. Beimengungen vom Erntegut trennender Durchlaßspalt (8; 8') gebildet ist, **dadurch gekennzeichnet, daß** im Bereich jeden Rollenpaares (4, 5) der Durchlaßspalt (8) durch eine radiale Verstellung der Gegenrolle (4) und/oder der zugeordneten Spiralrolle (5) einstellbar ist, derart, daß die gleichen Rollen jedes Rollenpaares (4, 5) jeweils gemeinsam verstellbar sind.

2. Erntemaschine nach Anspruch 1, **dadurch gekennzeichnet, daß** in der Reihenanordnung des Rollenseparators (3) die Spiralrollen (5) und die Gegenrollen (4) gruppenweise jeweils eine mit einem Höhenabstand (H) angeordnete Horizontalebene (E, E') definieren.

3. Erntemaschine nach Anspruch 1 oder 2, **dadurch gekennzeichnet, daß** die Spiralrollen (5) mit ihren Mittellängsachsen (M) jeweils eine Horizontalebene (E) definieren, die oberhalb der Horizontalebene (E') der Gegenrollen (4) angeordnet ist.

4. Erntemaschine nach einem der Ansprüche 1 bis 3, **dadurch gekennzeichnet, daß** die jeweilige Spiralrolle (5) ausgehend von einer Mittelstellung (N) zwischen zwei Gegenrollen (4, 4') derart verstellbar ist, daß die Spiralrolle (5) auf einer bogenförmigen Bahnkurve (C) sowohl zur zugeordneten Gegenrolle (4) als auch zur benachbarten Gegenrolle (4') hin verlagerbar ist.

5. Erntemaschine nach einem der Ansprüche 1 bis 4, **dadurch gekennzeichnet, daß** die Rollen (4, 5) des Rollenseparators (3) nach Art einer fliegenden Lagerung eine einseitige Antriebsbaugruppe (6) aufweisen, in deren Bereich die jeweiligen Antriebswellen (12, 13) sämtlicher Rollen (4, 5) mit einem einen Hydraulikmotor (7) aufweisenden Zahnradgetriebe (14) gekoppelt sind.

6. Erntemaschine nach einem der Ansprüche 1 bis 5, **dadurch gekennzeichnet, daß** nur die Spiralrollen (5) der Rollenpaare durch einen Stellantrieb (15) verlagerbar sind, der im Bereich der zumindest einen stirnseitigen Antriebsbaugruppe (6) vorgesehen ist.

7. Erntemaschine nach Anspruch 6, **dadurch gekennzeichnet, daß** die Spiralrollen (5) mittels des Stellantriebes (15) gleichzeitig verlagerbar sind.

8. Erntemaschine nach Anspruch 5 in Verbindung mit dem Anspruch 6 oder 7, **dadurch gekennzeichnet, daß** die Spiralrolle (5) im Bereich ihrer mit dem Zahnradgetriebe (14) verbundenen Antriebswelle (12) innerhalb der Antriebsbaugruppe (6) exzentrisch verlagerbar ist.

9. Erntemaschine nach Anspruch 5 in Verbindung mit einem der Ansprüche 6 bis 8, **dadurch gekennzeichnet, daß** die Spiralrolle (5) antriebsseitig im Bereich des Zahnradgetriebes (14) ein Hohlrad (17) mit Außenverzahnung (18) und Innenverzahnung (19) aufweist, in diese Innenverzahnung (19) ein auf der Antriebswelle (12) festgelegtes Stellzahnrad (20) eingreift und in axialem Abstand zu diesem Stellzahnrad (20) die Antriebswelle (12) zumindest ein in einer Stellbuchse (21, 23) exzentrisch gehaltenes Rollenlager (22, 24) aufweist.

10. Erntemaschine nach Anspruch 9, **dadurch gekennzeichnet, daß** die Spiralrolle (5) im Bereiches die Antriebswelle (12) durch das Stellzahnrad (20) antreibenden Hohlrades (17) beidseits jeweilige in exzentrischen Stellbuchsen (21, 23) aufgenommene Rollenlager (22, 24) aufweist.

11. Erntemaschine nach Anspruch 10, **dadurch gekennzeichnet, daß** die exzentrischen Stellbuchsen (21, 23) durch außenseitige Gleitlager (25, 26) in jeweils am Antriebsgehäuse (6) festgelegten Stützhülsen (27, 28) geführt sind.

12. Erntemaschine nach einem der Ansprüche 10 oder 11, **dadurch gekennzeichnet, daß** die Spiralrolle (5) im Bereich ihrer das stirnseitige Rollenlager (22) aufnehmenden Stellbuchse (21) eine an dieser geformte Außenverzahnung (29) aufweist, die in Verbindungseingriff mit einer Zahnstange (30) verbringbar ist und den Stellantrieb (15) bildet, derart, daß unabhängig von dem am Hohlrad (17) angreifenden Zahnradgetriebe (14) die Spiralrolle (5) insgesamt exzentrisch verlagerbar ist.

13. Erntemaschine nach Anspruch 6, oder nach Anspruch 6 in Verbindung mit einem der Ansprüche 6 bis 12, **dadurch gekennzeichnet, daß** der Stellantrieb (15) im Bereich der Zahnstange (30) einen hydraulischen Antrieb (33) aufweist.

14. Erntemaschine nach einem der Ansprüche 1 bis 13, **dadurch gekennzeichnet, daß** die Spiralrolle (5) auf ihrer die Förderstrecke (A) bildenden Oberfläche (11) zumindest eine schraubenlinienförmige Transportwulst (38) aufweist, deren Steigung (S, S')einen an die Kartoffelgröße angepaßten Mitnahmeraum (39) bildet.

## Claims

1. Harvester for root crops, and in particular potatoes, having a separating arrangement (2) which picks up the harvested crop plus admixtures from rows of earth and conveys it onward over screening belts or the like and which is provided at the end with at least one roller separator (3) which has mating and helical rollers (4, 5) which are arranged in a row aligned transversely to the direction of feed (A), which extend substantially parallel to the direction of feed and travel (F), which are rotatably driven in counter-rotating pairs, and between which a gap for through-passage (8; 8') is formed which separates a clod of earth (K) and like admixtures from the harvested crop, **characterised in that**, in the region of each pair of rollers (4, 5), the gap for through-passage (8) can be set by a radial adjustment of the mating roller (4) and/or the associated helical roller (5), in such a way that the same rollers in each of the pairs of rollers (4, 5) are adjustable together.

2. Harvester according to claim 1, **characterised in that**, group by group in the arranged row in the roller separator (3), the helical rollers (5) and the mating rollers (4) define respective horizontal planes (E, E') which are arranged at a vertical spacing (H).

3. Harvester according to claim 1 or 2, **characterised in that**, by their central longitudinal axes (M), the helical rollers (5) define respective horizontal planes (E) which are arranged above the horizontal planes (E') of the mating rollers (4).

4. Harvester according to one of claims 1 to 3, **characterised in that**, starting from a central position (N), the given helical roller (5) is adjustable between two mating rollers (4, 4') in such a way that the helical roller (5) is displaceable both towards the associated mating roller (4) and towards the adjacent mating roller (4') along a curved path (C).

5. Harvester according to one of claims 1 to 4, **characterised in that** the rollers (4, 5) of the roller separator (3) have, after the fashion of a cantilever mounting arrangement, a driving sub-assembly (6) at one end in the region of which the respective drive shafts (12, 13) of all the rollers (4, 5) are coupled to a gear train (14) having a hydraulic motor (7).

6. Harvester according to one of claims 1 to 5, **characterised in that** only the helical rollers (5) of the pairs of rollers are displaceable by a positioning drive (15) which is provided in the region of the at least one driving sub-assembly (6) at an end.

7. Harvester according to claim 6, **characterised in that** the helical rollers (5) are displaceable simultaneously by means of the positioning drive (15).

8. Harvester according to claim 5 in conjunction with claim 6 or 7, **characterised in that**, in the region of its drive shaft (12) connected to the gear train (14), the helical roller (5) is displaceable eccentrically within the driving sub-assembly (6).

9. Harvester according to claim 5 in conjunction with one of claims 6 to 8, **characterised in that**, at the driven end in the region of the gear train (14), the helical roller (5) has a ring gear (17) having a set of external teeth (18) and a set of internal teeth (19), and a positioning gear (20) fixed to the drive shaft (12) engages in the said set of internal teeth (19), and at a distance axially from the said positioning gear (20) the drive shaft (12) has at least one roller bearing (22, 24) which is held in an eccentric position in a positioning bush (21, 23).

10. Harvester according to claim 9, **characterised in that**, in the region of the two sides of the ring gear (17) which drives the drive shaft (12) by the positioning gear (20), the helical roller (5) has respective roller bearings (22, 24) which are held in eccentric positioning bushes (21, 23).

11. Harvester according to claim 10, **characterised in that** the eccentric positioning bushes (21, 23) are mounted by means of plain bearings (25, 26) situated on the outer sides in respective supporting sleeves (27, 28) fixed to the drive housing (6).

12. Harvester according to either of claims 10 or 11, **characterised in that**, in the region of its positioning bush (21) which holds the roller bearing (22) at an end, the helical roller (5) has a set of external teeth (29) integrally formed on the said positioning bush (21) which can be brought into connected engagement with a rack (30) and forms the positioning drive (15), in such a way that the helical roller (5) as a whole can be displaced eccentrically independently of the gear train (14) which engages with the ring gear (17).

13. Harvester according to claim 6 or according to claim 6 in conjunction with one of claims 6 to 12, **characterised in that** the positioning drive (15) has a hydraulic drive (33) in the region of the rack (30).

14. Harvester according to one of claims 1 to 13, **characterised in that**, on its surface (11) which forms the feeding area (A), the helical roller (5) has at least one helical transporting ridge (38) whose helix angle (S, S') creates an entraining space (39) matched to the size of the potatoes.

## Revendications

1. Machine à récolter des plantes racines, en particulier des pommes de terre, avec un dispositif de séparation (2) recevant le produit récolté avec des additifs de remblais et le transmettant par tamis à bande ou similaires, qui est pourvu côté extrémité d'au moins un séparateur à rouleaux (3) qui présente une rangée orientée transversalement au sens de transport (A) de rouleaux antagonistes et en spirale (4, 5) s'étendant sensiblement parallèlement au sens de transport ou de marche (F) ainsi qu'entraînés de manière rotative par paire en sens inverse, entre lesquels est constituée une fente de passage (8 ; 8') séparant une motte (K) ou des additifs similaires du produit récolté, **caractérisée en ce que** dans la zone de chaque paires de rouleaux (4, 5), la fente de passage (8) peut être réglée par un réglage axial du rouleau antagoniste (4) et/ou du rouleau en spirale associé (5) de telle manière que les rouleaux identiques de chaque paire de rouleaux (4, 5) puissent être réglés respectivement ensemble.

2. Machine à récolter selon la revendication 1, **caractérisée en ce que** dans la rangée du séparateur à rouleaux (3), les rouleaux en spirale (5) et les rouleaux antagonistes (4) définissent par groupes respectivement un plan horizontal (E, E') disposé à une distance verticale (H).

3. Machine à récolter selon la revendication 1 ou 2, **caractérisée en ce que** les rouleaux en spirale (5) définissent avec leurs axes médians longitudinaux (M) respectivement un plan horizontal (E) qui est disposé au-dessus du plan horizontal (E') des rouleaux antagonistes (4).

4. Machine à récolter selon l'une quelconque des revendications 1 à 3, **caractérisée en ce que** le rouleau en spirale respectif (5) peut être réglé en partant d'une position médiane (N) entre deux rouleaux antagonistes (4, 4') de telle manière que le rouleau en spirale (5) puisse être déplacé sur une trajectoire arquée (C) non seulement vers le rouleau antagoniste (4) associé mais aussi vers le rouleau antagoniste (4') contigu.

5. Machine à récolter selon l'une quelconque des revendications 1 à 4, **caractérisée en ce que** les rouleaux (4, 5) du séparateur à rouleaux (3) présentent un groupe d'entraînement (6) unilatéral comme un logement volant, dans la zone duquel les arbres d'entraînement (12, 13) respectifs de tous les rouleaux (4, 5) sont couplés à un engrenage (14) présentant un moteur hydraulique (7).

6. Machine à récolter selon l'une quelconque des revendications 1 à 5, **caractérisée en ce que** seuls les rouleaux en spirale (5) des paires de rouleaux peuvent être déplacés par un mécanisme de commande (15) prévu dans la zone d'au moins un groupe d'entraînement (6) côté frontal.

7. Machine à récolter selon la revendication 6, **caractérisée en ce que** les rouleaux en spirale (5) peuvent être déplacés simultanément à l'aide du mécanisme de commande (15).

8. Machine à récolter selon la revendication 5 en liaison avec la revendication 6 ou 7, **caractérisée en ce que** le rouleau en spirale (5) peut être déplacé de manière excentrée dans la zone de son arbre d'entraînement (12) relié à l'engrenage (14) dans le groupe d'entraînement (6).

9. Machine à récolter selon la revendication 5 en liaison avec l'une quelconque des revendications 6 à 8, **caractérisée en ce que** le rouleau en spirale (5) présente, côté entraînement dans la zone de l'engrenage (14), une roue creuse (17) avec une denture extérieure (18) et une denture intérieure (19), dans cette denture intérieure (19) s'engage une roue dentée de réglage (20) fixée sur l'arbre d'entraînement (12) et à distance axiale de cette roue dentée de réglage (20) l'arbre d'entraînement (12) présente au moins un palier à rouleaux (22, 24) maintenu de manière excentrée dans une douille de réglage (21, 23).

10. Machine à récolter selon la revendication 9, **caractérisée en ce que** le rouleau en spirale (5) présente des deux côtés des paliers à rouleaux (22, 24) respectifs reçus dans des douilles de réglage (21, 23) excentrées dans la zone de la roue creuse (17) entraînant l'arbre d'entraînement (12) par la roue dentée de réglage (20).

11. Machine à récolter selon la revendication 10, **caractérisée en ce que** les douilles de réglage excentrées (21, 23) sont guidées par des paliers lisses (25, 26) côté extérieur dans des douilles d'appui (27, 28) fixées respectivement sur le boîtier d'entraînement (6).

12. Machine à récolter selon l'une quelconque des revendications 10 ou 11, **caractérisée en ce que** le rouleau en spirale (5) présente dans la zone de sa douille de réglage (21) recevant le palier à roulement (22) côté frontal une denture extérieure (29) formée sur celle-ci qui peut être amenée en engagement de liaison avec une crémaillère (30) et forme le mécanisme de commande (15) de telle manière qu'indépendamment de l'engrenage (14) agissant sur la roue creuse (17), le rouleau en spirale (5) puisse être déplacé dans l'ensemble de manière excentrée.

13. Machine à récolter selon la revendication 6 ou selon la revendication 6 en liaison avec l'une quelconque des revendications 6 à 12, **caractérisée en ce que** le mécanisme de commande (15) présente un entraînement hydraulique (33) dans la zone de la crémaillère (30).

14. Machine à récolter selon l'une quelconque des revendications 1 à 13, **caractérisée en ce que** le rouleau en spirale (5) présente sur sa surface (11) formant la voie de transport (A) au moins un bourrelet de transport (38) en forme d'hélice, dont le pas (S, S') forme un espace d'entraînement (39) adapté à la grandeur des pommes de terre.
